# EUROPEAN PATENT APPLICATION

(11) **EP 1 585 005 A1**
(43) Date of publication of application: **12.10.2005**
(21) Application number: 04447095.3
(22) Date of filing: 08.04.2004
(51) Int. Cl.: G06F 1/00

(54) **Security device and process and associated products**

(71) Applicant: Thomson Multimedia Broadband Belgium, 2650 Edegem (BE)
(72) Inventor: Ben Ismail, Waeil, 9000 Gent (BE); De Bruycker, Dirk, 2650 Edegem (BE)
(74) Representative: Kerber, Thierry

(57) **Abstract**

The present invention concerns security device (1) and process for filtering rights of a user to execute functionalities of a protected system (10).

The security device comprises means for receiving (11) data (D) on discriminating features and filtering means (12) for authorising or forbidding those rights in function of the discriminating features. The receiving means receive at least channel data related to an identity of a channel for accessing the protected system, and the filtering means authorise or forbid the rights discriminatingly at least in function of those channel data.

## Description

The present invention relates to security device and process and to corresponding products.

From a security point of view, it is necessary to deploy a sort of protection against unauthorized access to a system. Different methods have been applied by now. Notably, it is well known to implement a single user name associated to a password authenticated during login instance: if the user is authenticated, full access to all available data and performing of all functionalities of the system is guarantied.

Such a technique has been improved for allowing different levels of users to access a system, by means of multi-level users techniques. Then, each user is provided a specific role that involves given privileges, beyond mere access to the system. Such privileges thus guarantee the possibility not only to access the system, but also to execute some determined functionalities. For recognizing the rights of the users, a password must be provided: a first one enables to perform everything in the system, while others offer only access to limited portions thereof, respectively.

A problem with such existing methods is that either a user obtains all the rights, or he obtains only a predetermined and fixed list of rights. Therefore, the risks of malicious or unauthorized acts are increased, since once the relevant password is obtained, the maximum extension of rights is offered to the user. On the other hand, for users having only limited rights, the restrictions in the authorized operations may sometimes be unduly tedious and penalizing. Namely, since the access rules are predefined, the right limitations for each level must be chosen in function of the most severely restricting cases.

For improving flexibility and security, it has been proposed to allow a temporary access, expiring after a limited configurable time. The user is then automatically logged off the system. That solution enables to offer broader rights to the users, but for a limited duration. However, it does not really solve the security problems, since a limited time may be enough for ill-intentioned persons to perform damaging operations. Further, the automatic logging off may cause difficulties and troubles.

The present invention concerns a security device for a protected system, that may enable to overcome those difficulties. That security device may thus make possible to execute a filtering of rights granted to a user for executing functionalities of the system, that is both flexible and safe.

In particular, the security device of the invention may allow taking into account in a dynamic way particular circumstances of the access to the system, thus avoiding fixing the rights allotted to each user.

The invention also relates to a security process having the advantages mentioned above.

It applies notably to firewalls and to integrated security modules in apparatus.

To this end, the invention relates to a security device as defined in claim 1.

In that claim, the "functionalities" of the protected system must be interpreted as covering not only specific operations, but also other types of rights, like access to given files or data.

The term "discriminatingly" means that the allotted rights are not provided according to all or nothing, but that at least one of them may be authorized while at least another may be forbidden.

The authorizations and prohibitions may be combined in any way to define the available operations. Namely, all operations may be enabled by default, in which case forbidden functionalities must be explicitly closed. By contrast, all operations may be implicitly forbidden, in which case each authorized operation must be specified.

The security device of the invention is particularly surprising in that the security mechanism does not rely on passwords (or at least not only), as usually done, but on the way the user accesses the targeted system. Thus, a dynamic filtering is provided, taking into account the special circumstances of the access.

This contrasts with the known techniques, in which each user is only allowed to perform all his privileges, whatever his access point to the system, while being possibly restricted in his available access points.

Typically, a user is not provided the same rights whether he accesses the system for example via a local network, or remotely contacts it. Local access involves increased security conditions, so that security provisions can be alleviated. On the other hand, remote access to the system via for example Internet may lead to much higher risks, so that the user rights may be carefully restricted.

That flexibility may apply to a plurality of various situations, involving the used path and/or the communication protocol. The level of risks may then be deemed in each case for deciding the level of rights to be granted.

Further, the allowed rights associated with the channel data may be flexibly modified in time. This may enable dynamic and easy reconfiguration of the protection filtering at any moment.

The discriminating features relating to the channel data are advantageously combined with other discriminating features, when deciding the authorized and forbidden rights. These other features preferably include user data and/or password data, so that the allotted rights may differ according to the user (different right levels may be defined) together with the way he accesses the protected system.

The discriminating features also preferably include connection data, of which value depends on a security level of the connection conditions. Those connection data may consist in a unique bit, providing either higher or lower rights configuration (respectively "not secure" or "secure").

Several preferred embodiments of the security device are mentioned in claims 2 to 8.

Particularly interesting achievements of the security device of the invention, combining channel data and connection data, are now developed hereinafter.

Namely, multi-level password mechanism issues the right for different users to perform actions to the system. Those rights are then defined on the ground of access privileges and service privileges.

An "access privilege" consists in a logical group of access manageable areas based on a security point of view. Here, a "manageable area" is an impacted area to be managed by the multi-level password mechanism. As an action of a user may impact multiple of such manageable areas, access to each of those impacted areas must be granted to a user for him to be allowed to execute that action.

A specific access privilege defines the user right to access the protected system from connection data (security level), from one of available communication protocols and/or from one of available communication paths. In a variant embodiment, the name of user and/or password may further be taken into account.

The considered communication protocols may include notably FTP (for "File Transfer Protocol"), Telnet, MDAP (for "Multicast Discovery and Access Protocol") and/or HTTP (for "HyperText Transfer Protocol"), while the considered communication paths may include notably LAN (for "Local Area Network"), WAN (for "Wide Area Network") and/or local serial communication.

As concerns the connection data, they may for example have a first "secure" value involving higher protection when connection to the system is done via a virtual private network (VPN) or via other security means, and a second "not secure" value involving lower protection when connection is not protected by security means.

A "service privilege" is a logical group of service manageable areas based on a management point of view. It defines the right to perform specific services functionalities.

In the present advantageous embodiment, each access privilege is associated with a list of service privileges, that are allowed for that particular way of accessing the protected system.

The access and service privileges enable to define "roles", each role consisting in a group identity that possesses a list of access privileges to access the system, each of the access privileges being associated with a list of service privileges. Such a role enables to manage access to the system and to services in the system.

Each user, corresponding to a given user ID (for "Identifier"), is then assigned a role (group identity) together with an associated user password. That user inherits dynamic privileges of the allotted role depending on the login instance, for accessing the protected system at each login time, namely when the user contacts the system for actions therein.

As the rights may be configured dynamically, the login time can have an impact on the login instance, and thus on the evaluation of the access and service privileges assigned to the user.

Thus, as explained above for that advantageous embodiment, the user's rights are defined by an assigned role that is constructed from access privileges and associated service privileges at login time. The service privileges are dynamically recalculated at action run time. Based on the user login instance, the multi-level password mechanism then extracts the matching access privilege and its associated service privileges. This insures that users may have different service privileges depending on their login instances.

Some particularly advantageous optional features of that embodiment are given below; they can be considered alone, or combined according to any technically possible way:
- the security device gives to customers the freedom to configure the manageable areas on which privileges, and hence control actions, are built; this provides a very flexible tool;
- roles that contain service privileges that are associated to access privileges, may be dynamically updated in function of the communication path (also called "origin" of the user access), for actions that contain attributes set at the action running time and depending on that communication path;
- roles are ordered according to a parent-child relationship, and a user with a specific role may only manage other users belonging to child roles of his own role;
- the protected system being connected to a WAN (such as notably Internet), there is provided a LAN administer role that enables to configure only LAN actions regarding the system.

Further, the invention also relates to a security process as defined in claim 8. That process is preferably intended to be executed by means of a security device according to any embodiment of the invention.

Another object of the invention is a computer program product comprising program code instructions for executing the steps of the process according to the invention, when that program is executed on a computer. By "computer program product", it is meant a computer program support, which may consist not only in a storing space containing the program, such as a diskette or a cassette, but also in a signal, such as an electrical or optical signal.

The invention also applies to a protected system, comprising a security device complying with any of its embodiments.

The invention will be better understood and illustrated by means of the following embodiment and execution examples, in no way limitative, with reference to the appended figures on which:
- Figure 1 is a block diagram of a protected system including a security device compliant with the invention;
- Figure 2 illustrates a hierarchical multi-level password system relying on the security device of Figure 1;
- Figure 3 shows a hierarchy of roles in parent-child relationship, used in the security device of Figure 1;
- Figure 4 gives a chart of an authentication and authorization process, executed by means of the security device of Figure 1;
- Figure 5 illustrates an access privilege matching at login instance, following the authentication and authorization process of Figure 4 and executed by means of the security device of Figure 1;
- Figure 6 illustrates the determination of role privileges based on the access privilege matching of Figure 5, executed by means of the security device of Figure 1;
- and Figure 7 shows managed areas involved in a dynamic recalculation of dynamic managed areas, executed by the security device of Figure 1.

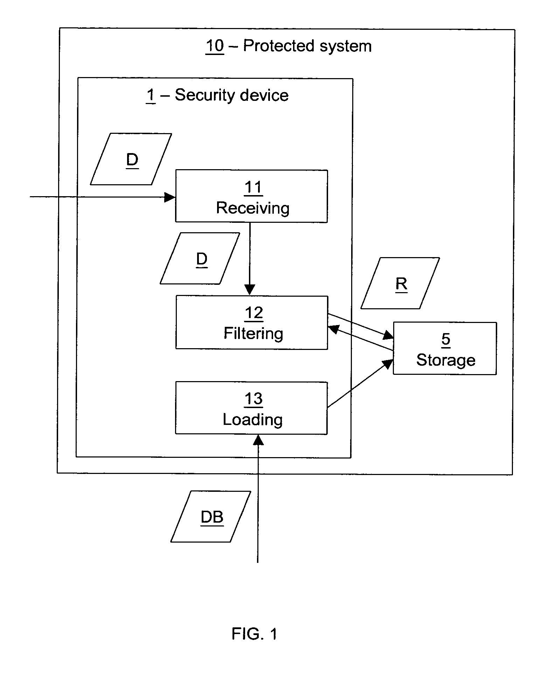

In Figures 1, the represented blocks are purely functional entities, which do not necessarily correspond to physical separated entities. Namely, they could be developed in the form of software, or be implemented in one or several integrated circuits.

Moreover, a generic notation liable to be completed by indexes, like for example "ROLE", refers to a given model object (e.g. a role), which may be specified into specific items thanks to given suffixes (e.g. numbers).

A protected system 10 (Figure 1) comprises a security device 1 for filtering rights of a user to execute functionalities in the system 10.

The security device 1 comprises a receiving module 11, intended to receive data D on discriminating features, and a filtering module 12, for authorizing some of the rights and forbidding some other of the rights in function of the discriminating features. The filtering module 12 is thus able to produce a set of enabled rights R, which are stored in a storing space 5 at least during a given login instance of a user.

The security device 1 also comprises a loading module 13, able to load a database DB of rights authorisations and prohibitions and to store it in the storing space 5. The filtering means 12 are then intended to use that database DB for deciding when authorising and forbidding the rights.

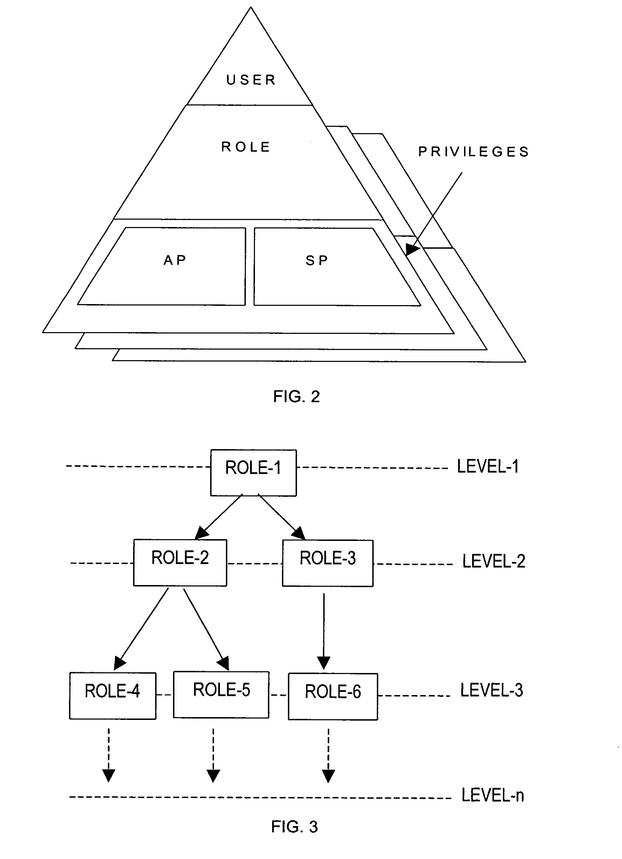

In operation, the security device 1 exploits a multi-password hierarchy (Figure 2), where each user USER may be assigned a role ROLE from a list of available roles. Each role is itself constructed of privileges PRIVILEGES, which are in turn made of two parts:
- access privileges AP defining modalities of access to the system 10,
- and service privileges SP defining manageable areas that restrict allowed actions to be performed in the system 10 by means of the role ROLE.

The user USER may be assigned different privileges for his role ROLE, depending on the specific current login instance, as detailed herein below.

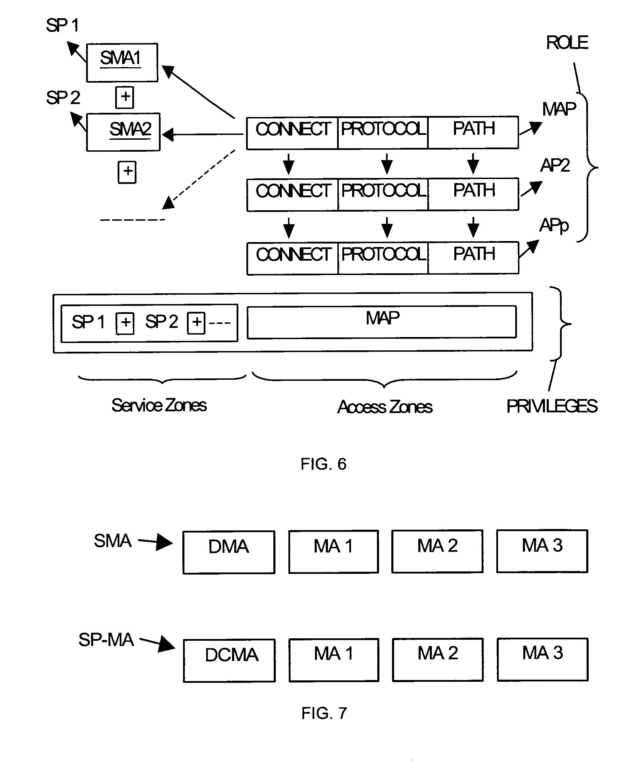

The service privileges rely on a set SMA of manageable areas MA (Figure 6). By default, a set of such manageable areas MA is configured by default. However, customers are given the flexibility not to use the default values, but instead configure the manageable areas MA according to their interests.

The roles ROLE themselves are built in a parent-child relationship hierarchy (Figure 3), where the roles are arranged in levels LEVEL. For example, as illustrated, the highest level LEVEL-1 is associated with a single role ROLE-1, a second level LEVEL-2 with two roles ROLE-2 and ROLE-3, and a third level LEVEL-3 with three roles ROLE-4, ROLE-5 and ROLE-6. Any further levels associated with other roles (like LEVEL-n) may be provided.

As a general rule, a user belonging to a first role ROLE-A can alter rights of users belonging to a second role ROLE-B only if:
- both roles ROLE-A and ROLE-B are not in a same level LEVEL,
- the level of the second role ROLE-B is lower than the level of the first role ROLE-A;
- and role ROLE-B is in the child path of role ROLE-A (for example ROLE-3 enables to change ROLE-6, but not ROLE-5).

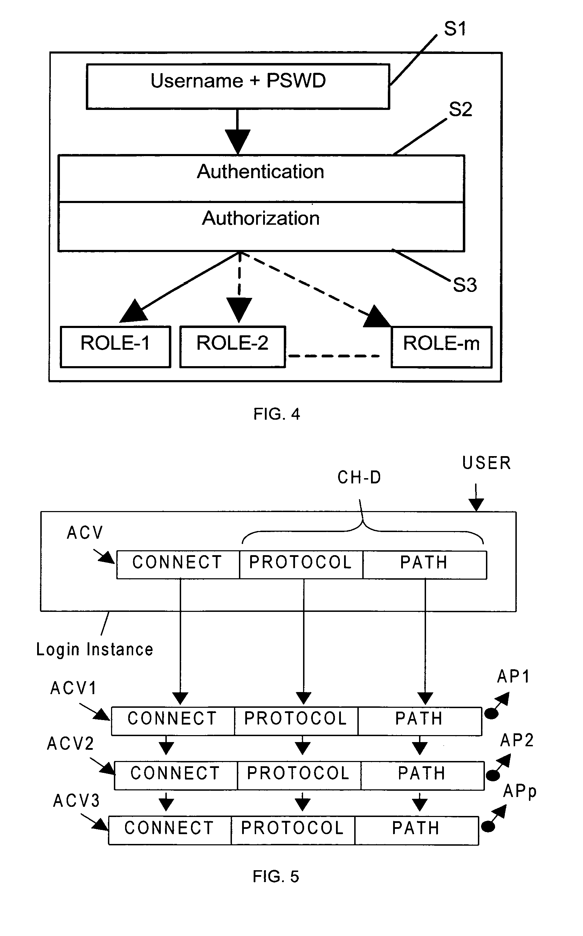

At login time (Figure 4), the user USER being provided with a user name must give his password (PSWD, step S1). Then, if authenticated and granted (step S2), he is authorized with an assigned role among the available roles ROLE-1, ROLE-2...ROLE-m (step S3), for example with role ROLE-1.

In a further step (Figure 5), a matching access privilege MAP for the accessed user USER allotted with a specific role is found. For that, the filtering module 12 exploits an access value ACV of the current login instance, that value ACV comprising:
- connection data noted "CONNECT", based on a type of connection, which specifies a selected protection level corresponding to a security level; in the present example, those data are carried by a single bit having a higher protection level ("secure") and a lower protection level ("not secure");
- and channel data CH-D made of data PROTOCOL on the communication protocol and of data PATH on the communication path.

That access value ACV is then compared to a set of access values ACV1, ACV2...ACVp, which correspond respectively to access privileges AP1, AP2...APp. This enables to find the matching access privilege MAP of the allotted role ROLE.

The effective privileges PRIVILEGES of the role ROLE area calculated at login time, by extracting from the database DB or from the default values, the service privileges SP (here, SP1, SP2, etc.) associated with the matching access privilege MAP (Figure 6). Those service privileges SP1, SP2... correspond respectively to sets SMA1, SMA2... of manageable areas MA.

Finally, the privileges PRIVILEGES are dynamically derived at the login time from access zones associated with the matching access privilege MAP and from service zones associated with the relevant service privileges SP1, SP2...

The filtering means 12 is provided for supporting at action run time, dynamic recalculation of dynamic managed areas MA of the service privileges SP, noted DMA, when such recalculation is required by some action parameters.

For example (Figure 7), a set SMA of manageable areas MA comprising the dynamic managed areas DMA together with other manageable areas MA1, MA2 and MA3, the service privileges SP at action run time lead to a set of managed areas SP-MA comprising dynamically calculated managed area DCMA, together with the manageable areas MA1, MA2 and MA3.

## Claims

1. Security device (1) for filtering rights of a user (USER) to execute functionalities of a protected system (10), said security device comprising:
- receiving means (11) for receiving data (D) on discriminating features,
- and filtering means (12) for authorising some of said rights and forbidding some other of said rights in function of said discriminating features,
**characterized in that** said receiving means (11) are intended to receive at least channel data (CH-D) related to an identity of a channel for accessing said protected system, and said filtering means (12) are intended to authorise and forbid said rights discriminatingly at least in function of said channel data (CH-D).

2. Security device (1) according to claim 1, **characterized in that** said receiving means (11) are intended to receive also user data related to an identity of said user (USER), and said filtering means (12) are intended to authorise and forbid said rights discriminatingly also in function of said user data.

3. Security device (1) according to any of claims 1 or 2, **characterized in that** said receiving means (11) are intended to receive also password data (PSW-D) related to a value of at least one password, and said filtering means (12) are intended to authorise and forbid said rights discriminatingly also in function of said password data (PSW-D).

4. Security device (1) according to any of the preceding claims, **characterized in that** said receiving means (11) are intended to receive also connection data (CONNECT) related to a connection security level, and said filtering means (12) are intended to authorise and forbid said rights discriminatingly also in function of said connection data (CONNECT).

5. Security device (1) according to any of the preceding claims, **characterized in that** said filtering means (12) are provided for exploiting at least three rights levels (LEVEL-1...LEVEL-n) including a higher rights level (LEVEL-1), an intermediary rights level (LEVEL-2) and a lower rights level (LEVEL-3), said higher, intermediary and lower rights levels offering successively decreased rights authorisations and increased rights prohibitions, said rights levels being respectively associated with different kinds of users, said higher rights level (LEVEL-1) offering the possibility to modify said right authorisations and prohibitions for said intermediary and lower rights levels (LEVEL-2, LEVEL-3), and said intermediary rights level (LEVEL-2) offering the possibility to modify said right authorisations and prohibitions for said lower rights level (LEVEL-3).

6. Security device (1) according to any of the preceding claims, **characterized in that** said channel data (CH-D) include data related to a used communication protocol (PROTOCOL).

7. Security device (1) according to any of the preceding claims, **characterized in that** said channel data (CH-D) include data related to a used path (PATH), said path belonging preferably to wide area network, local area network and local serial communication access.

8. Security device (1) according to any of the preceding claims, **characterized in that** it comprises loading means for loading a database (DB) of rights authorisations and prohibitions, said filtering means (12) being intended to use said database (DB) for deciding when authorising and forbidding said rights.

9. Security process for filtering rights of a user (USER) to execute functionalities of a protected system (10), said security process comprising:
- receiving data (D) on discriminating features,
- and filtering said rights by authorising some of said rights and forbidding some other of said rights in function of said discriminating features,
**characterized in that** said receiving step includes receiving at least channel data (CH-D) related to an identity of a channel for accessing said protected system, and said filtering step includes authorising and forbidding said rights discriminatingly at least in function of said channel data (CH-D),
said security process being preferably intended to be executed by means of a security device (1) according to any of claims 1 to 8.

10. Computer program product, **characterized in that** it comprises program code instructions for executing the steps of the security process according to claim 9 when said program is executed on a computer.

11. Protected system (10), **characterized in that** it comprises a security device (1) according to any of claims 1 to 8.
